# FASCICULE DE BREVET EUROPEEN

(11) **EP 0 446 098 B1**
(45) Date de publication et mention de la délivrance du brevet: **17.08.1994**
(21) Numéro de dépôt: 91400501.2
(22) Date de dépôt: 25.02.1991
(51) Int. Cl.: F16D 13/64

(54) **Friction d'embrayage à faible inertie, notamment pour véhicule automobile**
Reibungskupplungsscheibe mit niedriger Trägheit, insbesondere für Kraftfahrzeuge
Low inertia friction clutch disc, especially for an automotive vehicle

(30) Priorité: 27.02.1990 FR 9002433
(43) Date de publication de la demande: 11.09.1991
(73) Titulaire: VALEO, 75848 Paris Cédex 17 (FR)
(72) Inventeur: Graton, Michel, F-75020 Paris (FR); Tauvron, Fabrice, F-94000 Créteil (FR)
(74) Mandataire: Gamonal, Didier

(56) Documents cités:
- EP-A- 0 252 583
- FR-A- 2 255 499
- US-A- 3 064 782
- US-A- 4 529 079

## Description

La présente invention se rapporte à une friction d'embrayage, notamment pour véhicule automobile, du type comportant deux garnitures de friction coaxiales écartées axialement l'une de l'autre et fixées sur des supports annulaires se faisant face axialement et comportant des prolongements radiaux dirigés vers l'intérieur, par l'intermédiaire desquels ils se rapprochent axialement l'un de l'autre à la faveur d'au moins un pli oblique que présente l'un desdits prolongements.

Une telle friction est décrite dans le document EP-A-0419 329 conforme au préambule de la revendication 1. Ses garnitures sont propres à être serrées entre le plateau de pression et de réaction de l'embrayage tandis que les supports sont propres à être solidarisés en rotation à un arbre mené de l'embrayage (l'arbre d'entrée de la boîte de vitesse le plus souvent).

Dans celui-ci, l'élément de progressivité intercalé entre les deux garnitures de friction est constitué par une pluralité de protubérances en matière élastique, dont certaines au moins relient entre eux les supports, lesdites protubérances délimitant entre elles des canaux.

Grâce à cette disposition les protubérances sont bien ventilées, la friction a une bonne progressivité et sous charge elle s'adapte bien aux déformations thermiques du plateau de pression et de réaction, de sorte que les garnitures ont une usure régulière.

De plus l'inertie de la friction n'est pas augmentée outre mesure.

Les supports ont une épaisseur relativement faible et participent à la progressivité de la friction tout en permettant une fixation des garnitures de friction sans avoir recours à des rivets de fixation, ce qui permet de conserver une faible inertie à la friction d'embrayage.

Néanmoins, les protubérances consistant en de minces bandes de matière, il peut être souhaitable d'améliorer la résistance de celles-ci, notamment lorsque la friction tourne à grande vitesse et que la force centrifuge est augmentée.

Dans le document US-A-3 064 782 des coupelles remplies d'un matériau de friction sont montées dans un stator grâce à des disques. Des rondelles élastiques sont interposées entre les disques. Il en résulte que la progressivité n'est pas aussi bonne que souhaitée.

La présente invention a pour objet d'accroître la résistance des protubérances, sans perdre les avantages de la disposition à deux supports décrite ci-dessus.

Suivant l'invention, une friction du type susindiqué est caractérisée en ce que les protubérances consistent en des plots saillants centralement creux et délimités au moins en majeure partie par un cordon en matière élastique, et en ce que les plots sont en forme de boucle qui s'étend radialement et circonférentiellement.

Grâce à l'invention, la résistance des protubérances est accrue, tout en ayant une bonne ventilation de celle-ci, et une bonne progressivité grâce à sa forme creuse.

En outre, le moment d'inertie de la friction n'est pas augmenté outre mesure. Certes, on aurait pu adapter une disposition de celle décrite dans le document EP-A-0 252 583.

Dans celui-ci, des protubérances élastiques portent directement les garnitures de friction en étant liées au support (comme dans le document US-A-4,529,079), et la zone de contact entre lesdites protubérances et le support est réduite du fait que les protubérances sont associées à des pattes du support s'étendant alternativement axialement dans un sens et dans l'autre. Il en résulte une mauvaise tenue à la force centrifuge.

Dans la présente invention, il y a deux supports qui, à leur périphérie externe, sont dépourvues de pattes s'étendant axialement dans un sens et dans l'autre, en sorte que les garnitures de friction sont bien maintenues et que la zone de contact entre les protubérances, en forme de plot, et le ou les support(s) est grande.

La friction selon l'invention a donc une bonne tenue à la force centrifuge et peut tourner à grande vitesse, tout en ayant une bonne progressivité lors du serrages des garnitures de friction entre le plateau de pression et de réaction de l'embrayage, et une bonne ventilation.

De plus, il est possible d'augmenter la largeur circonférentielle des canaux de ventilation.

On appréciera que la présence du cordon permet de réaliser un grand nombre de formes, notamment des boucles tortueuses, et qu'il est possible aisément d'avoir une progressivité variable, par exemple, en faisant varier la hauteur du cordon ou en logeant un plot de plus grande hauteur à l'intérieur de l'autre ou vice versa.

Le plot peut être complètement fermé par son cordon ou être avantageusement doté de passages pour évacuer l'air lors de l'écrasement des garnitures de friction.

La description qui va suivre illustre l'invention en référence aux dessins annexés dans lesquels :
- la figure 1 est une vue de face partielle, avec arrachement local en partie haute et basse, d'une friction d'embrayage suivant l'invention ;
- la figure 2 est une vue en coupe selon la ligne A-A de la figure 1 ;
- la figure 3 est une vue partielle analogue à la figure 2, sans le matériau de friction.

En se référant aux figures on a représenté une friction d'embrayage 1, notamment pour véhicule automobile, comprenant deux garnitures de friction annulaires et coaxiales 2 et 3, solidarisées en rotation et fixées à un flasque (non visible), lié en rotation à un moyeu (non représenté) solidaire en rotation d'un arbre mené de l'embrayage, par exemple, par rivetage. Les garnitures 2,3 sont propres à être serrées entre le platau de pression et de réaction de l'embrayage solidaires en rotation d'un arbre menant, et à transmettre le mouvement de l'arbre menant à l'arbre mené.

Le matériau de friction 4 de chaque garniture 2,3 est directement surmoulé ou adhérisé, par exemple par collage, sur un support annulaire 5,6, respectivement. Les deux supports 5,6 se font face axialement et sont ici métalliques en étant de faible épaisseur. Ce matériau de friction 4 est, par exemple, à base d'amiante, de fibres de verre ou de carbone ou de matériau céramétallique.

Chaque support 5,6 comporte un anneau plat 7,8 d'où fait saillie vers l'intérieur un prolongement radial 9,10. Les anneaux 7,8 sont parallèles entre eux et offrent une grande surface d'appui aux garnitures 2,3.

Les prolongements radiaux 9,10 sont pliés en direction l'un de l'autre de façon à se rejoindre pour leur fixation mutuelle, leurs portions radiales internes étant parallèles entre elles et aux anneaux 7,8.

On notera que les plis 33 des supports 5,6 sont obliques et améliorent l'élasticité axiale de ceux-ci et que les garnitures de friction 2 et 3 sont écartées axialement l'une de l'autre du fait de la configuration de leur support 5,6 ménageant entre eux un espace axial précis.

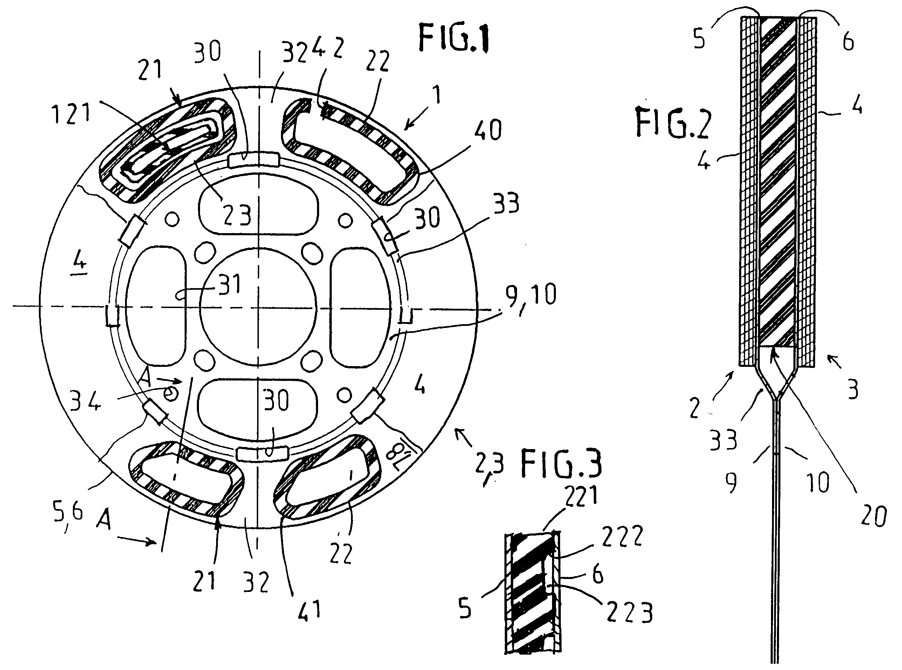

Lesdits prolongements 9,10 sont perçés (trous 34 à la figure 1) et fixés à une rondelle de guidage (non visible) en mettant à profit les entretoises joignant entre elles les deux rondelles de guidage.

Pour plus de précision on se reportera par exemple à la figure 4 du document FR-A-2 600 732.

La friction comporte en outre un élément élastique de progressivité 20, formant ressort, intercalé entre les deux garnitures de friction 2 et 3 et constitué par une pluralité de protubérances 21 en matière élastique, dont certaines au moins sont solidaires des supports 5,6, lesdites protubérances 21 délimitant entre elles des canaux 32.

Ici toutes les protubérances 21 sont solidaires à la fois des supports 5,6.

Ainsi les supports 5,6 sont reliés entre eux par les protubérances 21 surmoulées ou adhérisées à ceux-ci.

Suivant l'invention ces protubérances 21 consistent en des plots saillants 21 centralement creux et délimités au moins en majeure partie par un cordon 40 en matière élastique, lesdits plots étant en forme de boucle qui s'étend radialement et circonférentiellement.

Ces plots peuvent avoir toutes formes appropriées. Ils sont de préférence répartis régulièrement circulairement.

Par exemple (figure 1), ils peuvent être de forme oblongue et être globalement de forme trapézoïdale (partie haute de la figure 1).

Avantageusement ces plots trapézoïdaux présentent à leur périphérie externe une portée 22, de plus grande étendue circonférentielle, que la portée 23 qu'ils présentent à leur périphérie interne. Bien entendu l'inverse est possible.

Ici ils s'étendent globalement radialement sur toute la hauteur des anneaux plats 7,8, c'est-à-dire globalement sur toute la hauteur des garnitures 4 (figure 2).

Leur portée externe 22 et leur portée interne 23 étant ici en arc de cercle.

Grâce à ces dispositions, la friction a radialement une raideur sensiblement constante de la périphérie externe à la périphérie interne de ces garnitures de friction, de sorte que sous charge (garnitures 2,3 serrées entre les plateaux de pression et de réaction) une bonne répartition de pression peut être obtenue, et que lesdites garnitures 2,3 peuvent épouser correctement la forme des plateaux de pression et de réaction de l'embrayage, même en cas d'échauffement de ceux-ci.

Ces plots 21 peuvent être fermés par le cordon 40 ou en variante être ouverts par au moins un passage 42 pour permettre une bonne évacuation de l'air lors de l'écrasement des garnitures.

Il est possible de rendre lesdits plots dissymétrique (partie basse de la figure 1).

L'un des côtés latéraux du plot peut être plus incliné (référence 41 à la figure 1) que l'autre, de façon à créer une bonne ventilation entre deux plots consécutifs et de recréer en quelque sorte des ailettes de ventilation. Ce plot présente donc une pointe.

Cette forme conduit à augmenter la portée externe 23, par rapport à la portée interne 22 et avoir une raideur encore plus constante de la périphérie interne à la périphérie externe.

Des ouvertures 30 sont présentes au niveau des portées internes 23 et affectent les plis 33 continus.

Ces ouvertures 30 s'étendent en majeure partie entre deux plots, en regard des canaux 32.

La matière élastique des protubérances 21 est avantageusement de faible densité et peut être un caoutchouc à base de silicone résistant bien à la température.

Avantageusement ce cordon 40 est déposé aisément à l'aide d'une buse et est à base d'une pâte collante en silicone qui durcit après dépôt. On peut utiliser par exemple les adhésifs décrits dans le document US-A-4,529,079.

Ces protubérances sont ainsi collées sur les supports 5,6, du côté opposé au matériau de friction 4.

En variante on peut adhériser les plots par vulcanisation ou les fixer par emboîtement ou clipsage. Dans ces deux derniers cas les supports présentent localement des bossages pour permettre l'emboîtement ou le clipsage.

Ainsi il est possible de créer un sous-ensemble manipulable et transportable avec les supports 5,6 et l'élément de progressivité 20, puis de fixer sur les faces externes dudit sous-ensemble le matériau de friction 4.

En variante il est possible de fabriquer à part les garnitures de friction 2,3 avec leur support associé 5,6, puis de relier les deux sous-ensembles par l'élément de progressivité 20, les ouvertures 30 permettant ultérieurement une ventilation de l'ensemble, notamment quand les plis 33 sont continus.

Ici les supports 5,6 à leur périphérie interne sont en forme de disque et sont dotés de fenêtres 31 de forme oblongue pour passage des ressorts que présente usuellement la friction d'embrayage.

On notera que les garnitures de friction 2,3, avec leur support 5,6, sont identiques l'une à l'autre et qu'il y a une imbrication des protubérances 21, les fenêtres 31 étant en regard les unes des autres comme les ouvertures 30.

Le cordon 40 peut avoir une épaisseur s'amincissant progressivement axialement d'un des supports 5,6 à l'autre.

Ceci est rendu possible notamment grâce à la forme de la buse.

Ainsi qu'on l'aura compris, lesdits plots délimitant entre eux des canaux 32 qui débouchent ; une bonne ventilation favorisée par les ouvertures 30 est ainsi obtenue et lesdits plots peuvent fluer notamment circonférentiellement.

Une bonne progressivité axiale est obtenue lors du réembrayage lorsque les garnitures 2,3 se rapprochent l'une de l'autre en étant serrées progressivement entre le plateau de pression et de réaction de l'embrayage.

Lors de l'opération de débrayage les garnitures de friction 2,3 sont libérées et l'élément de progressivité 20 limite leur écartement axial, de sorte que lesdites garnitures 2,3 ne risquent pas de venir lécher le plateau de pression et/ou de réaction.

Ainsi qu'il ressort à l'évidence de la description et des dessins la taille et les dimensions des plots dépendent des applications, ledit plot pouvant être cylindrique ou en variante avoir une forme en diabolo et être ouvert.

Ainsi à la partie haute de la figure 1, six plots sont prévus et à la partie basse huit.

Bien entendu la présente invention n'est pas limitée aux exemples de réalisation décrits.

En particulier la périphérie interne des supports peut consister en des languettes, comme décrit dans le sus-mentionné document FR-A-2 600 732.

De même les plots 21 peuvent être inclinés dans le sens circonférentiel, par exemple, avoir la forme d'un parallélogramme pour formation d'ailettes.

Ainsi qu'il ressort à l'évidence de la description, tous les plots 21 sont solidaires d'au moins l'un des supports 5,6, certains pouvant n'être solidaires que d'un support pour obtention d'une progressivité variable, un espace libre existant alors entre lesdits plots 21 et le support dont ils ne sont pas solidaires.

Ainsi certains plots ont une hauteur différente par rapport aux autres.

Il est possible également de loger un plot de hauteur différente à l'intérieur de l'autre, comme visible en 121, à la figure 1.

Le cordon 221 (figure 3) peut être lié aux deux supports 5,6 et présenter également des bossages 222 avec alternance de creux 223.

Ceci est rendu aisément possible par exemple en déposant plusieurs couches, pour formation d'un plot.

Bien entendu les garnitures de friction 2,3 au lieu d'être annulaires peuvent être fractionnées.

Il en est de même en ce qui concerne les prolongements radiaux 9,10.

Les supports peuvent constituer le voile de la friction d'embrayage comme visible à la figure 7 du sus-mentionné document FR-A-2 600 732.

Les supports peuvent être fixés également à l'une des rondelles de guidage de la friction d'embrayage, à l'aide de rivets spécifiques comme visible à la figure 1 de ce sus-mentionné document.

Les supports peuvent ne pas être identiques entre eux, l'un pouvant être plan, tandis que l'autre présente un pli oblique pour accolement desdits supports à leur périphérie interne.

Les plis 33 au lieu d'être obliques, comme dans les figures 1 et 2, peuvent être en accordéon ou analogues.

Enfin les ouvertures 30 peuvent être réparties régulièrement par alternance d'un disque à l'autre ou être réparties d'une autre manière, l'un des supports pouvant présenter un plus grand nombre d'ouvertures que l'autre, voire même toutes les ouvertures.

## Revendications

1. Friction d'embrayage (1), notamment pour véhicule automobile, du type comportant deux garnitures de friction coaxiales (2,3), pour serrage entre le plateau de pression et de réaction de l'embrayage, écartées axialement l'une de l'autre et fixées sur des supports annulaires (5,6), propres à être solidarisés en rotation à un arbre mené de l'embrayage, se faisant face axialement et comportant des prolongements radiaux (9,10) dirigés vers l'intérieur, par l'intermédiaire desquels ils se rapprochent axialement l'un de l'autre, à la faveur d'au moins un pli oblique (33) que présente l'un desdits prolongements (9,10), dans laquelle un élément de progressivité (20), formant ressort, est intercalé entre les deux garnitures de friction (2,3) en étant solidaire d'au moins un desdits supports (5,6), et dans laquelle ledit élément de progressivité (20) est constitué par une pluralité de protubérances (21) en matière élastique, dont certaines au moins relient entre eux lesdits supports (5,6), lesdites protubérances (21) délimitant entre elles des canaux (32), caractérisée en ce que lesdites protubérances consistent en des plots (21) saillants centralement creux et délimités au moins en majeure partie par un cordon (40) en matière élastique, et en ce que les plots (21) sont en forme de boucle qui s'étend radialement et circonférentiellement.

2. Friction d'embrayage selon la revendication 1, caractérisée en ce que lesdits plots (21) ont une forme oblongue.

3. Friction d'embrayage selon la revendication 2, caractérisée en ce que lesdits plots (21) présentent à leur périphérie externe une portée externe (22), de plus grande étendue circonférentielle, que la portée interne (23) qu'ils présentent à leur périphérie interne.

4. Friction d'embrayage selon l'une quelconque des revendications précédentes, caractérisée en ce que lesdits plots (21) ont une forme globalement trapézoïdale, avec une portée externe (22) et interne (23) en forme d'arc de cercle.

5. Friction d'embrayage selon la revendication 4, caractérisée en ce que l'un (41) des côtés latéraux du plot (21) est plus incliné que l'autre, de façon à créer des ailettes de ventilation.

6. Friction d'embrayage selon l'une quelconque des revendications 1 à 5, caractérisée en ce que les cordons (40) ont une épaisseur s'amincissant progressivement axialement d'un des supports à l'autre.

7. Friction d'embrayage selon l'une quelconque des revendications 1 à 5, caractérisée en ce que le cordon (221) présente des bossages (222).

8. Friction d'embrayage selon l'une quelconque des revendications précédentes, caractérisée en ce que certaines des protubérances (21) sont solidaires que de l'un des supports (5,6), un espace existant entre lesdites protubérances (21) et l'autre desdits supports (5,6).

9. Friction d'embrayage selon la revendication 8, caractérisée en ce que les plots (21) ont des hauteurs différentes.

10. Friction d'embrayage selon la revendication 9, caractérisée en ce qu'un plot (121) de hauteur différente est logé à l'intérieur d'un autre.

11. Friction d'embrayage selon l'une quelconque des revendications précédentes, dans laquelle les supports (5,6) ont des prolongements radiaux (9,10) dont l'un au moins est plié en direction l'un de l'autre de façon à se rejoindre le long de la portion radiale interne, caractérisée en ce des ouvertures (30) sont ménagées dans les pliures obliques (33) desdits prolongements (9,10) en regard des protubérances (21).

12. Friction d'embrayage selon l'une quelconque des revendications précédentes, caractérisée en ce que les cordons (40) desdits plots (21) présentent au moins un passage (42).

## Patentansprüche

1. Reibungskupplungsscheibe (1), insbesondere für Kraftfahrzeuge, in der Ausführung mit zwei koaxialen Reibbelägen (2, 3) für die Einspannung zwischen der Druckplatte und dem Schwungrad der Kupplung, die axial voneinander entfernt angeordnet und auf ringförmigen Trägern (5, 8) für die drehfeste Verbindung mit einer Abtriebswelle der Kupplung befestigt sind, welche einander axial gegenüberliegen und nach innen gerichtete radiale Verlängerungen (9, 10) umfassen und über die sie sich vermittels mindestens einer Schrägbiegung (33), die an einer der genannten Verlängerungen (9, 10) vorgesehen ist, axial aneinander annähern, wobei ein als Feder wirkendes Progressivitätselement (20) zwischen den beiden Reibbelägen (2, 3) unter fester Verbindung mit mindestens einem der Träger (5, 6) eingesetzt ist und wobei das Progressivitätselement (20) aus einer Mehrzahl von Ausstülpungen (21) aus elastischem Material besteht, von denen zumindest einige die Träger miteinander (5, 6) verbinden, während die Ausstülpungen (21) miteinander Kanäle (32) begrenzen, **dadurch gekennzeichnet**, daß die Ausstülpungen aus mittig vorspringenden hohlen Ansätzen (21) bestehen, die zumindest zum größten Teil durch eine Leiste (40) aus elastischem Material begrenzt werden, und daß die Ansätze (21) die Form einer Schleife aufweisen, die sich radial und am Kreisumfang erstreckt.

2. Reibungskupplungsscheibe nach Anspruch 1 , **dadurch gekennzeichnet,** daß die Ansätze (21) eine längliche Form aufweisen.

3. Reibungskupplungsscheibe nach Anspruch 2 , **dadurch gekennzeichnet,** daß die Ansätze (21) an ihrer Außenperipherie eine äußere Auflagefläche (22) aufweisen, die eine größere Umfangsausdehnung als die innere Auflagefläche (23) hat, die sie an ihrer Innenperipherie aufweisen.

4. Reibungskupplungsscheibe nach einem der vorangehenden Ansprüche, **dadurch gekennzeichnet,** daß die Ansätze (21) insgesamt trapezförmig mit einer kreisbogenförmigen äußeren (22) und inneren Auflagefläche (23) ausgebildet sind.

5. Reibungskupplungsscheibe nach Anspruch 4 , **dadurch gekennzeichnet,** daß eine (41) der Seitenkanten des Ansatzes (21) stärker geneigt als die andere ist, so daß Lüftungsrippen gebildet werden.

6. Reibungskupplungsscheibe nach einem der Ansprüche 1 bis 5 , **dadurch gekennzeichnet,** daß die Leisten (40) eine Dicke aufweisen, die sich von einem der Träger zum anderen axial fortschreitend verringert.

7. Reibungskupplungsscheibe nach einem der Ansprüche 1 bis 5 , **dadurch gekennzeichnet,** daß die Leiste (221) Vorsprünge (222) aufweist.

8. Reibungskupplungsscheibe nach einem der vorangehenden Ansprüche, **dadurch gekennzeichnet,** daß einige der Ausstülpungen (21) nur mit einem der Träger (5, 6) fest verbunden sind, wobei ein Zwischenraum zwischen diesen Ausstülpungen (21) und dem jeweils anderen der Träger (5, 6) besteht.

9. Reibungskupplungsscheibe nach Anspruch 8 , **dadurch gekennzeichnet,** daß die Ansätze (21) unterschiedliche Höhen haben.

10. Reibungskupplungsscheibe nach Anspruch 9 , **dadurch gekennzeichnet,** daß ein Ansatz (121) mit unterschiedlicher Höhe im Innern eines anderen eingesetzt ist.

11. Reibungskupplungsscheibe nach einem der vorangehenden Ansprüche, wobei die Träger (5, 6) radiale Verlängerungen (9, 10) aufweisen, von denen mindestens eine in Richtung der anderen gebogen ist, so daß sie entlang des inneren radialen Abschnitts zusammengeführt werden, **dadurch gekennzeichnet,** daß Öffnungen (33) in den Schrägbiegungen (33) dieser Verlängerungen (9, 10) gegenüber den Ausstülpungen (21) vorgesehen sind.

12. Reibungskupplungsscheibe nach einem der vorangehenden Ansprüche , **dadurch gekennzeichnet,** daß die Leisten (40) der Ansätze (21) mindestens einen Durchlaß (42) aufweisen.

## Claims

1. A friction clutch (1), especially for a motor vehicle, of the type comprising two coaxial friction liners (2, 3), to be gripped between the pressure plate and the reaction plate of the clutch, being spaced apart axially from each other and secured on annular supports (5, 6) adapted to be secured in rotation to a driven shaft of the clutch, in axial face-to-face relationship and including inwardly directed radial extension portions (9, 10), by means of which they are brought together axially through at least one oblique bent portion (33) of one of the said extension portions (9, 10), wherein a cushion element (20), acting as a spring, is interposed between the two friction liners (2, 3), being secured with respect to at least one of the said supports (5, 6), and wherein the said cushion element (20) comprises a plurality of projections (21) of elastic material, at least some of which join the said supports (5, 6) together, the said projections (21) delimiting channels (32) between them,
characterised in that the said projections consist of projecting bosses (21) hollow in the centre and delimited at least mostly by a band (40) of elastic material, and in that the bosses (21) are in the form of a loop which extends radially and circumferentially.

2. A friction clutch according to Claim 1,
characterised in that the said bosses (21) are oblong in shape.

3. A friction clutch according to Claim 2,
characterised in that the said bosses (21) have at their outer periphery an outer surface (22) which has a greater circumferential extent than the inner surface (23) which they have at their inner periphery.

4. A friction clutch according to any one of the preceding Claims, characterised in that the said bosses (21) are generally trapezoidal in shape, with an outer surface (22) and an inner surface (23) in the form of an arc of a circle.

5. A friction clutch according to Claim 4,
characterised in that one (41) of the lateral sides of the boss (21) is more inclined than the other, so as to define ventilation fins.

6. A friction clutch according to any one of Claims 1 to 5, characterised in that the thickness of the bands (40) reduces progressively in the axial direction from one of the supports to the other.

7. A friction clutch according to any one of Claims 1 to 5, characterised in that the band (221) has bosses (222).

8. A friction clutch according to any one of the preceding Claims, characterised in that some of the projections (21) are secured to only one of the supports (5, 6), with a space existing between the said projections (21) and the other of the said supports (5, 6).

9. A friction clutch according to Claim 8,
characterised in that the bosses (21) are of different depths.

10. A friction clutch according to Claim 9,
characterised in that a boss (121) of different height is arranged within another.

11. A friction clutch according to any one of the preceding Claims, in which the supports (5, 6) have radial extensions (9, 10) at least one of which is bent towards the other one, so that they meet along the inner radial portion, characterised in that openings (30) are formed in the oblique bent portions (33) of the said extensions (9, 10), facing the projections (21).

12. A friction clutch according to any one of the preceding Claims, characterised in that the bands (40) of the said bosses (21) define at least one passage (42).
